# EUROPEAN PATENT APPLICATION

(11) **EP 4 800 576 A1**
(43) Date of publication of application: **02.09.2026**
(21) Application number: 24881754.6
(22) Date of filing: 25.10.2024
(51) Int. Cl.: G06F 16/9535

(54) **MATERIAL DISPLAY METHOD AND APPARATUS, DEVICE AND STORAGE MEDIUM**

(30) Priority: 25.10.2023 CN 202311394166
(71) Applicant: Beijing Zitiao Network Technology Co., Ltd., Beijing 100190 (CN)
(72) Inventor: LI, Jia, Beijing 100028 (CN); SONG, Qing, Beijing 100028 (CN); JIANG, Zhen, Beijing 100028 (CN); LIAN, Yuchen, Beijing 100028 (CN)
(74) Representative: Grünecker Patent- und Rechtsanwälte PartG mbB
(86) International application number: PCT/CN2024/127417
(87) International publication number: WO 2025/087394

(57) **Abstract**

The disclosure provides a method, an apparatus, a device, and a storage medium for material presentation, and relates to the technical field of computers. The method includes: presenting, in response to a creation material presentation operation, a material presentation interface in a predetermined creation interface corresponding to a predetermined object, where the predetermined object is configured to create a media work; displaying search information in a predetermined search area in the material presentation interface, where the search information is associated with the predetermined object; and presenting material information of a first target material in a first predetermined presentation area in the material presentation interface, where the first target material includes a material matching the search information in a predetermined material library corresponding to the material presentation interface.

## Description

This application claims priority to Chinese Patent Application No. 202311394166.1, filed on October 25, 2023, and entitled "Method, Apparatus, Device, and Storage Medium for Material Presentation", the entire content of which is incorporated herein by reference.

### FIELD

Embodiments of the present disclosure relate to the technical field of computers, in particular to a method, an apparatus, a device, and a storage medium for material presentation.

### BACKGROUND

With the continuous development of Internet technologies, users may browse various media content through the Internet, and different users may share their own works with one another in the form of posting media content such as videos.

### SUMMARY

The embodiment of the present disclosure provides a method, an apparatus, a device, and a storage medium for material presentation, and may optimize an existing material presentation solution.

In a first aspect, an embodiment of the present disclosure provides a method for material presentation. The method includes: presenting, in response to a creation material presentation operation, a material presentation interface in a predetermined creation interface corresponding to a predetermined object, where the predetermined object is configured to create a media work; displaying search information in a predetermined search area in the material presentation interface, where the search information is associated with the predetermined object; and presenting material information of a first target material in a first predetermined presentation area in the material presentation interface, where the first target material includes a material matching the search information in a predetermined material library corresponding to the material presentation interface.

In a second aspect, an embodiment of the present disclosure further provides an apparatus for material presentation. The apparatus includes: an interface presentation module configured to present, in response to a creation material presentation operation, a material presentation interface in a predetermined creation interface corresponding to a predetermined object, where the predetermined object is configured to create a media work; a search information display module configured to display search information in a predetermined search area in the material presentation interface, where the search information is associated with the predetermined object; and a material information presentation module configured to present material information of a first target material in a first predetermined presentation area in the material presentation interface, where the first target material includes a material matching the search information in a predetermined material library corresponding to the material presentation interface.

In a third aspect, an embodiment of the present disclosure further provides an electronic device. The electronic device includes: one or more processors; and a storage device for storing one or more programs. When the one or more programs are executed by the one or more processors, the one or more processors are caused to implement the method for material presentation provided in the embodiments of the present disclosure.

In a fourth aspect, an embodiment of the present disclosure further provides a storage medium including computer-executable instructions. The computer-executable instructions, when executed by a computer processor, are configured to perform the method for material presentation provided in the embodiments of the present disclosure.

### BRIEF DESCRIPTION OF DRAWINGS

The above and other features, advantages, and aspects of various embodiments of the present disclosure will become more apparent from the following detailed description taken in conjunction with the accompanying drawings. Throughout the drawings, the same or similar reference numbers refer to the same or similar elements. It should be understood that the drawings are schematic, and members and elements are not necessarily drawn to scale.
FIG. 1 is a schematic flowchart of a method for material presentation provided by an embodiment of the present disclosure;
FIG. 2 is a schematic diagram of interface interaction provided by an embodiment of the present disclosure;
FIG. 3 is a schematic diagram of an interface provided by an embodiment of the present disclosure;
FIG. 4 is a schematic flowchart of another method for material presentation provided by an embodiment of the present disclosure;
FIG. 5 is a schematic diagram of another interface interaction provided by an embodiment of the present disclosure;
FIG. 6 is a schematic diagram of another interface provided by an embodiment of the present disclosure;
FIG. 7 is a schematic structural diagram of an apparatus for material presentation provided by an embodiment of the present disclosure; and
FIG. 8 is a schematic structural diagram of an electronic device provided by an embodiment of the present disclosure.

### DETAILED DESCRIPTION

Embodiments of the present disclosure will be described in more detail below with reference to the accompanying drawings. While certain embodiments of the present disclosure are shown in the drawings, it is to be understood that the present disclosure may be implemented in various forms, and should not be construed as limited to the embodiments set forth herein. Rather, these embodiments are provided to enable a more thorough and complete understanding of the present disclosure. It should be understood that the drawings and embodiments of the present disclosure are for illustrative purposes only and are not intended to limit the scope of the present disclosure.

It should be understood that the steps recited in the method embodiments of the present disclosure may be performed in different orders, and/or performed in parallel. Further, the method embodiments may include additional steps and/or omit performing the illustrated steps. The scope of the present disclosure is not limited in this regard.

As used herein, the term "comprising" and variations thereof are open-ended, i.e., "including but not limited to". The term "based on" is "based at least in part on". The term "one embodiment" refers to "at least one embodiment"; the term "another embodiment" refers to "at least one further embodiment"; the term "some embodiments" refers to "at least some embodiments". The relevant definitions of other terms will be given below.

It should be noted that the concepts such as "first" and "second" mentioned in the present disclosure are merely used to distinguish different apparatuses, modules, or units, and are not intended to limit the order of functions performed by the apparatuses, modules, or units or the mutual dependency relationship therebetween.

It should be noted that the modification of "a" and "a plurality" mentioned in the present disclosure is illustrative and not limiting, and should be understood by those skilled in the art as "one or more" unless explicitly indicated otherwise in the context.

The names of messages or information interacted between the plurality of apparatuses in embodiments of the present disclosure are for illustrative purposes only and are not intended to limit the scope of such messages or information.

It may be understood that, before the technical solutions disclosed in the embodiments of the present disclosure are used, types, usage scopes, usage scenarios and the like of personal information related to the present disclosure should be notified to the user in an appropriate manner according to the relevant laws and regulations and obtain authorization from the user.

For example, in response to receiving an active request of a user, prompt information is sent to the user to explicitly prompt the user that the requested operation will need to obtain and use the personal information of the user. Therefore, the user may autonomously select whether to provide personal information to software or hardware, such as an electronic device, an application, a server, a storage medium, or the like, executing the operation of the technical solution of the present disclosure according to the prompt information.

As an optional but non-limiting implementation, in response to receiving the active request of the user, the manner of sending the prompt information to the user may be, for example, a pop-up window, and the prompt information may be presented in a text manner in the pop-up window. In addition, the pop-up window may further carry a selection control for the user to select "agree" or "not agree" to provide personal information to the electronic device.

It may be understood that the foregoing notification and obtaining a user authorization process is merely illustrative and does not constitute a limitation on implementations of the present disclosure, and other manners of meeting related laws and regulations may also be applied to implementations of the present disclosure.

It may be understood that data involved in the technical solution (including but not limited to the data itself, the acquisition or use of the data) should follow the requirements of the corresponding laws and regulations and related provisions.

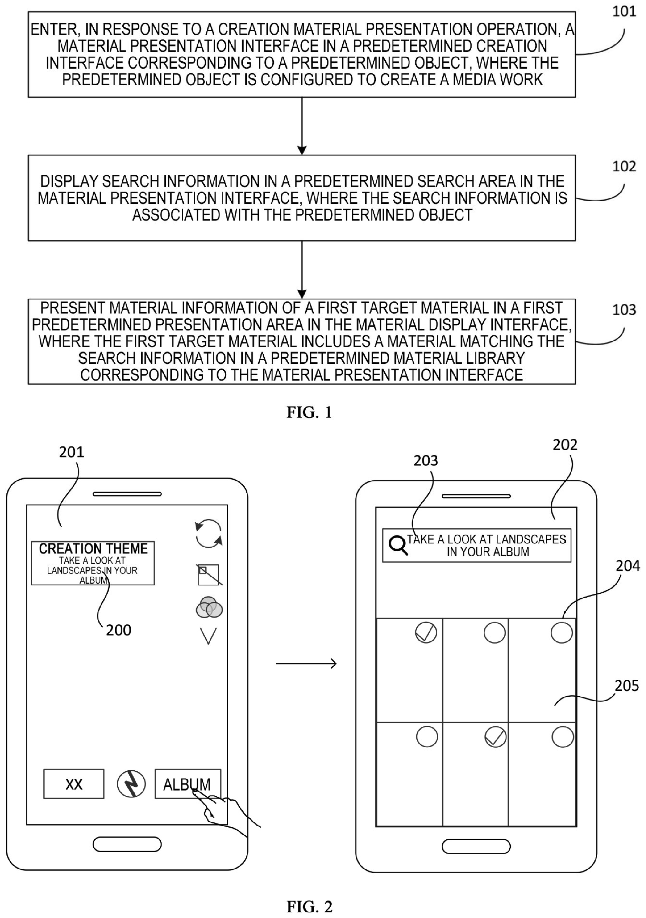

FIG. 1 is a schematic flowchart of a method for material presentation provided by an embodiment of the present disclosure. The embodiments of the present disclosure are applicable to scenarios involving material presentation. The method may be performed by an apparatus for material presentation, and the apparatus may be implemented in the form of software and/or hardware. Optionally, it may be implemented by an electronic device, and the electronic device may be a mobile terminal such as a mobile phone, a smart watch, a tablet, or a personal digital assistant, or may be a device such as a personal computer (PC) terminal or a server.

As shown in FIG. 1, the method includes the following steps.

In step 101, in a predetermined creation interface corresponding to a predetermined object, in response to a creation material presentation operation, a material presentation interface is presented. The predetermined object is configured to create a media work.

In an embodiment of the present disclosure, the predetermined creation interface may be an interface in a predetermined application, and the predetermined application may be an application having a media work creation function, and the specific type is not limited. The specific form of the media work is not limited, and the media work may include an image work, an image-and-text work, a video work, a music work, or the like. For example, the predetermined object may include an element related to the media work, and the type of the predetermined object may include, for example, a creation theme and/or a creation element. The creation theme may include related theme information or theme objects for reflecting a content body of the media work. A type of the creation element may include an effect, a template, a music, or the like. The effect may also be referred to as a prop, and effect processing or effect element addition, such as stylized effects or interactive games, may be performed on the basic creation material (herein referred to as a creation material or material, for example, an image or a video); and the template may include a function of processing content of the material, such as beauty enhancement, splicing, or editing.

For example, the creation material presentation operation may be, for example, a trigger operation on the material presentation control. After receiving the creation material presentation operation, the material presentation interface is entered, and a plurality of materials may be presented on the material presentation interface for the user to select, and creation of the media work is performed based on the selected material.

In step 102, search information is displayed in a predetermined search area in the material presentation interface. The search information is associated with the predetermined object.

For example, the search area for displaying the search information may be predetermined in the material presentation interface, and denoted as a predetermined search area. A style and a size, and a location of the predetermined search area in the material presentation interface are not limited. Optionally, the predetermined search area is a predetermined search box, and may be displayed at the top of the material presentation interface.

For example, the search information may be information used to perform material search and automatically filled in the predetermined search area after entering the material presentation interface. The search information may be text information, and specifically may be a sentence or a plurality of sentences, and may be a word or a plurality of words, or the like, which is not limited thereto. The specific association manner between the search information and the predetermined object is not limited and may be determined according to the type of the predetermined object.

For example, the search information being associated with the predetermined object includes: the search information being associated with theme information of the predetermined object. The theme information may include, for example, a theme name or the like. Optionally, the theme information may be directly displayed in the predetermined search area as the search information; or the theme information may be subjected to word segmentation processing (or called token processing), and a keyword may be extracted from the theme information as the search information to be displayed in the predetermined search area. Optionally, semantic analysis may also be performed on the theme information, to determine association information of the theme information, and determine the association information, or the association information and the theme information as search information.

For example, the type of the predetermined object includes an effect, the effect may predetermine a corresponding associated object, and the search information is determined according to the associated object. For example, if the effect is an effect that needs to be added to an animal, and the corresponding associated object is an animal, the search information may be an animal.

In step 103, material information of a first target material is presented in a first predetermined presentation area in the material presentation interface. The first target material includes a material matching the search information in a predetermined material library corresponding to the material presentation interface.

In an embodiment of the present disclosure, the specific number of first target materials is not limited. The predetermined material library corresponding to the material presentation interface may be, for example, a local album of the electronic device. The first target material may be understood as a material obtained after the search is performed in the predetermined material library based on the search information, and the specific search manner is not limited, for example, may be a word segmentation search. For example, word segmentation processing may be first performed on the search information, and a search is performed on at least one word obtained by performing the word segmentation processing.

For example, the material information may be image information, and may be specifically determined based on a type of the material, for example, the first target material is an image, the material information may be a thumbnail of the image, and for another example, the first target material is a video, and the material information may be a thumbnail of a screenshot of the video.

For example, the first predetermined presentation area may be all presentation areas or part of presentation areas used to present the material information in the material presentation interface. The presentation layout of the material information in the first predetermined presentation area is not limited, for example, may be in a matrix form. The material information may be sorted in a predetermined sorting manner, for example, may be sorted according to the sequence of a generation time of the first target material to which the material information belongs, or may be sorted according to a score of a matching degree between the first target material to which the material information belongs and the search information.

Optionally, after the material presentation interface is presented, the search information may be automatically displayed and the material information of the first target material may be presented, to improve the presentation efficiency of the material information of the first target material. It should be noted that, before the material information of the first target material is automatically presented, it is required to obtain a sufficient authorization for using and searching the local album from the user.

FIG. 2 is a schematic diagram of an interface interaction provided by an embodiment of the present disclosure. As shown in FIG. 2, in a predetermined creation interface 201 corresponding to a predetermined object (for example, a creation theme, in which a theme name is "take a look at a landscape in your album") 200, the user inputs a creation material presentation operation by tapping an "album", to present a material presentation interface 202. In a predetermined search area 203 in the material presentation interface 202, search information "take a look at a landscape in your album" associated with the predetermined object is displayed, and material information 205 of the first target material id presented in a first predetermined presentation area 204 in the material presentation interface 202. As shown in FIG. 2, material information of 6 materials matching the search information is presented. Therefore, the user may quickly select the required material without sequentially browsing a large amount of materials in the predetermined material library. It may be understood that the predetermined object is determined upon entering the predetermined creation interface. For example, the user may enter the predetermined creation interface through an entry for shooting with the same theme; or after entering the predetermined creation interface, the user may add a predetermined object to the predetermined creation interface through an editing operation.

According to the method for material presentation provided by the embodiment of the present disclosure, in a predetermined creation interface corresponding to a predetermined object configured to create a media work, in response to a creation material presentation operation, a material presentation interface is presented. Search information associated with the predetermined object is displayed in a predetermined search area in the material presentation interface. Material information of the first target material is presented in a first predetermined presentation area in the material presentation interface. The first target material includes a material associated with the search information in a predetermined material library corresponding to the material presentation interface. By adopting the above technical solution, in the process of creating the media work by using the predetermined object, when it is necessary to select a creation material from the predetermined material library, the search information may be displayed in the predetermined search area in the material presentation interface and the material associated with the search information in the predetermined material library may be presented, thereby improving the speed of the user for searching the creation material related to the predetermined object, and improving the media work creation efficiency.

Optionally, the first target material is provided for user to select, and the first target material selected by the user is configured to combine with the predetermined object to generate a media work. As shown in FIG. 2, the user may select one or more photos in the first predetermined presentation area 204 by checking a checkbox, and the selected photo may be combined with the predetermined object to generate the media work.

In some embodiments, the creation element includes a predetermined visualization element, and the method further includes: displaying, in response to a selection operation of the user for the first target material, the first target material selected by the user and the predetermined visualization element on the predetermined creation interface. The visualization element may include an element, such as a sticker element, capable of being displayed in a predetermined creation interface and the generated media work.

In some embodiments, displaying the first target material selected by the user and the predetermined visualization element on the predetermined creation interface includes: displaying the first target material selected by the user on the predetermined creation interface, and displaying the predetermined visualization element in association with theme information of the predetermined object. The manner of association display may be, for example, that the theme information of the predetermined object is included in the predetermined visualization element. As shown in FIG. 2, the theme information of the predetermined object "take a look at a landscape in your album" is included in the predetermined visualization element in a sticker style, to implement the association display of the sticker and the theme information.

In some embodiments, after displaying the search information in the first predetermined search area in the material presentation interface, the method further includes: receiving a search trigger operation. Presenting the material information of the first target material in the first predetermined presentation area in the material presentation interface includes: presenting, in response to the search trigger operation, the material information of the first target material in the first predetermined presentation area in the material presentation interface. Therefore, after the search trigger operation is received, the material information of the first target material is presented, satisfying the user's viewing requirements for the material information under different conditions more flexibly.

For example, the search trigger operation may be a trigger operation on a search control, and the search control may be presented in an association area of the predetermined search area, for example, displayed on the right side of the predetermined search area. Optionally, a display style of the search information displayed before inputting the search trigger operation is different from a display style of the search information displayed after inputting the search trigger operation, and different display styles may be embodied in different text colors, fonts, background colors, or the like.

In some embodiments, receiving the search trigger operation includes: receiving a trigger operation for the predetermined search area. The method further includes: presenting, in response to the trigger operation for the predetermined search area, an input control in the material presentation interface, where the input control is configured to receive an editing operation for the search information. Thus, the demand for actively editing the search information by the user may be satisfied, and after the predetermined search area is triggered by the user, the material information of the first target material is presented while the input control is presented, that is, the user may edit the search information based on the input control under the condition that a search result corresponding to the search information before editing is viewed, providing richer reference information for the editing operation of the user.

For example, before the user taps the predetermined search area, the text in the search information appears gray, and after the user taps the predetermined search area, the text in the search information turns to black, and an input control is presented. For example, the input control may be an input keyboard panel, and an input cursor is located at the last word of the search information. Meanwhile, in the first predetermined presentation area, the material information of the first target material is presented, and the user may edit the current search information based on the input keyboard panel.

In some embodiments, before receiving the search trigger operation, the method further includes: presenting material information of a first predetermined material in a second predetermined presentation area in the material presentation interface. The first predetermined material includes a material in the predetermined material library.

For example, the first target material is included in the first predetermined material, and/or the number of first predetermined materials is greater than or equal to the number of first target materials. The second predetermined presentation area may be the same as or different from the first predetermined presentation area. For example, it may be all presentation areas of the material presentation interface for presenting material information. In the process of presenting the material information of the first predetermined material, a gesture operation such as a sliding operation input by the user may also be received to present more material information of the first predetermined material that has not been presented. Optionally, the second predetermined presentation area is the same as the first predetermined presentation area, and after receiving the search trigger operation, in response to the search trigger operation, in the first predetermined presentation area in the material presentation interface, material information of the first predetermined material is refreshed to present material information of the first target material.

In some embodiments, while presenting the material information of the first target material in the first predetermined presentation area in the material presentation interface, the method further includes: presenting material information of a second predetermined material in a third predetermined presentation area in the material presentation interface, where the third predetermined presentation area is different from the first predetermined presentation area, and the second predetermined material includes a material in the predetermined material library that is different from the first target material. Thus, the user may simultaneously view the material information of the first target material and the material information of the second predetermined material in the material presentation interface, and the material searching efficiency is improved.

For example, the number of presentation positions in the first predetermined presentation area may be a predetermined number, such as 3 or 6, that is, the predetermined number of material information of the first target material may be simultaneously presented in the first predetermined presentation area. The first predetermined presentation area may also support a gesture operation, such as a sliding operation, that is input by the user to present more material information of the first target material that has not been presented.

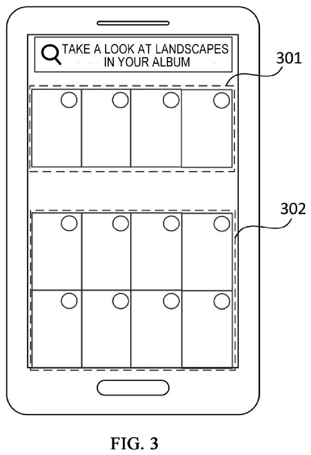

FIG. 3 is a schematic diagram of an interface provided by an embodiment of the present disclosure. As shown in FIG. 3, while the material information of the first target material is presented in the first predetermined presentation area 301 in the material presentation interface, the material information of the second predetermined material is presented in the third predetermined presentation area 302.

Optionally, in order to facilitate the user to distinguish the first target material from the second predetermined material, text descriptions may be respectively added in the first predetermined presentation area and the third predetermined presentation area, for example, "smart matching result" and "remaining photos", etc. are respectively added. It may be understood that the matching operation is performed in a user authorized material library after fully authorized by the user.

In some embodiments, in the case that the search information includes at least two search terms, the first target material includes an intersection or union of at least two sets of materials, and each set of materials in the at least two sets of materials includes a material obtained by searching in the predetermined material library according to the corresponding search term. Thus, a more accurate search result may be presented.

For example, it is assumed that the theme information of the predetermined object is "look at sea at dusk", the search information associated with the theme information is "look at sea at dusk", and two search terms "dusk" and "sea" may be obtained after word segmentation processing, or the search information itself is "dusk" and "sea" obtained after word segmentation is performed on the theme information and the keyword is extracted. The "dusk" related photos may be searched in the album by using "dusk" to obtain a first material set, and the "sea" related photos may be searched in the album by using "sea" to obtain a second material set. That is, if the first target material includes an intersection of the first material set and the second material set, a photo used as the first target material is related to "dusk" and "sea" simultaneously; if the first target material includes a union of the first material set and the second material set, a photo used as the first target material may be related to the "dusk", or may be related to the "sea", or may be related to "dusk" and "sea" simultaneously. The user may select an appropriate photo from the first predetermined presentation area for media content creation related to the predetermined object according to actual requirements.

In some embodiments, after displaying the search information in the predetermined search area in the material presentation interface, the method further includes: updating the search information in response to an editing operation for the search information, where the first target material includes a material matching the updated search information in the predetermined material library corresponding to the material presentation interface. Thus, the user may be supported to autonomously edit the search information, the self-defined search capability is realized, to help the user to more quickly and accurately search for the material to be used.

For example, regarding the material information of the first target material being automatically presented after the material presentation interface is presented, after the search information is updated, the first target material matching the updated search information may be automatically presented, or after the user triggers the search operation, the first target material matching the updated search information may be presented.

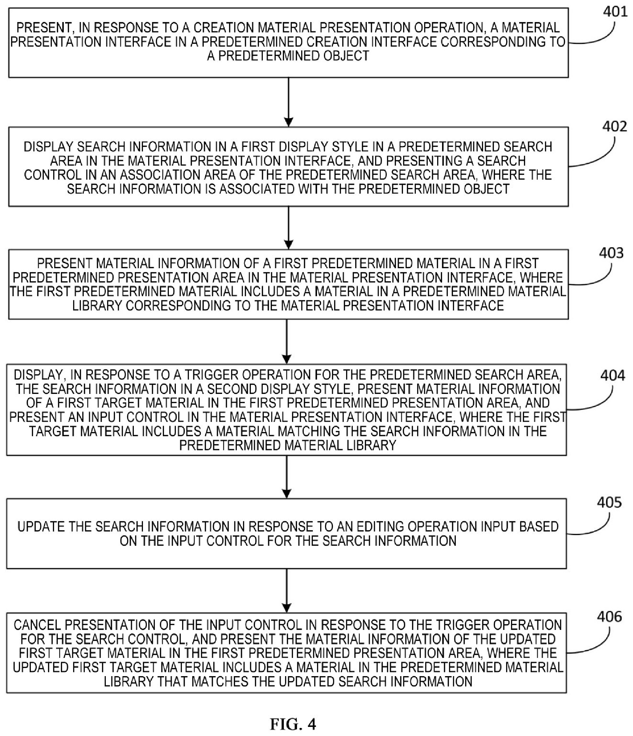

FIG. 4 is a schematic flowchart of another method for material presentation provided by an embodiment of the present disclosure. The embodiments of the present disclosure make an optimization based on the various optional solutions described in the above embodiments. Specifically, the method includes the following steps.

In step 401, in response to the creation material presentation operation, a material presentation interface is presented in a predetermined creation interface corresponding to a predetermined object.

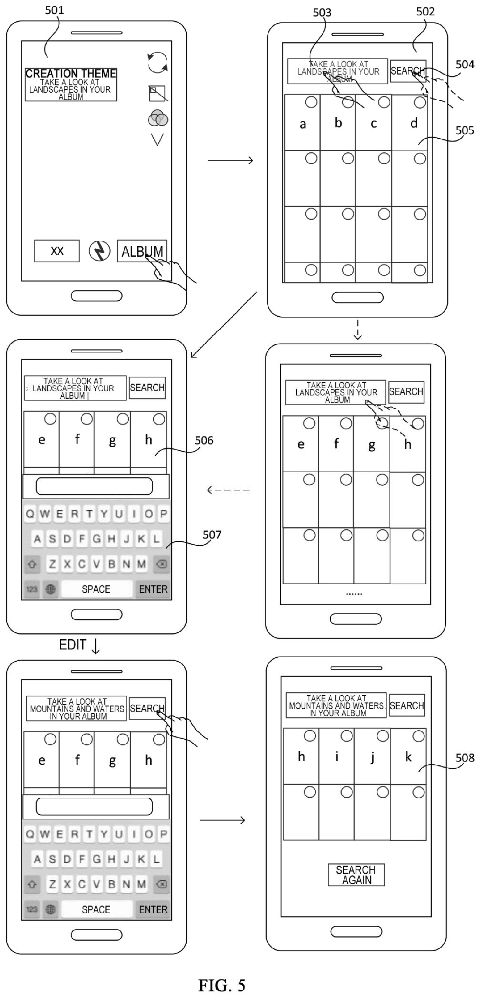

FIG. 5 is a schematic diagram of another interface interaction provided by an embodiment of the present disclosure. As shown in FIG. 5, in a predetermined creation interface 501 corresponding to a predetermined object (such as a creation theme, a theme name is "take a look at landscapes in your album"), the user inputs a creation material presentation operation by tapping "album", entering a material presentation interface 502.

In step 402, search information is displayed in a first display style in a predetermined search area in the material presentation interface, and a search control is presented in an association area of the predetermined search area. The search information is associated with the predetermined object.

As shown in FIG. 5, the search information "look at landscapes in your album" is automatically displayed in a gray color in the predetermined search area 503 of the material presentation interface 502, and a search control 504 is presented in the association area of the predetermined search area 503. The predetermined search area 503 may be specifically a search box.

In step 403, material information of a first predetermined material is presented in a first predetermined presentation area in the material presentation interface. The first predetermined material includes a material in a predetermined material library corresponding to the material presentation interface.

As shown in FIG. 5, material information 505 of the first predetermined material is presented in the first predetermined presentation area, the predetermined material library may be an album local to the electronic device, and after entering the material presentation interface 502, photos and/or videos in the album are presented by default, for example, a photo a, a photo b, a photo c, a photo d, or the like as shown. The user may browse more photos by inputting an upward-sliding operation in the first predetermined presentation area.

In step 404, the search information is displayed in a second display style in response to a trigger operation for the predetermined search area. The material information of the first target material is presented in the first predetermined presentation area, and an input control is presented in the material presentation interface. The first target material includes a material matching the search information in the predetermined material library.

As shown in FIG. 5, if the user wants to edit the search information, the search information may be displayed in a black color after the predetermined search area 503 is tapped. Material information 506 of the first target material is presented in the first predetermined presentation area, such as a photo e, a photo f, a photo g and a photo h as shown, and an input control 507 is presented in the material presentation interface 502, such as a keyboard as shown, and a cursor in the predetermined search area 503 is located at the end of the search information.

Optionally, as shown in FIG. 5, if the user does not have a requirement for editing temporarily, the search result may be checked by tapping the search control 504, that is, in response to the trigger operation on the search control, the material information of the first target material is presented in the first predetermined presentation area. If the user is not satisfied with the search result, presentation of the input control 507 may still be triggered by triggering the predetermined search area 503, so as to edit the search information.

In step 405, the search information is updated in response to an editing operation input based on the input control for the search information.

For example, as shown in FIG. 5, if the user wants to create a work related to mountains and waters, and the current "landscapes" is not accurate, the search information may be edited through the input control 507, for example, "landscapes" is modified to "mountains and waters", so that the search information is updated to "look at mountains and waters in your album".

In step 406, presentation of the input control is cancelled in response to a trigger operation on the search control, and the updated material information of the first target material is presented in the first predetermined presentation area. The updated first target material includes a material in the predetermined material library that matches the updated search information.

As shown in FIG. 5, after the user completes the edition, the search control 504 may be tapped, the input control 507 may be dismissed, and the updated material information 508 of the first target material may be presented in the first predetermined presentation area, such as a photo h, a photo i, a photo j, a photo k, or the like.

According to the method for material presentation provided by the embodiment of the present disclosure, after the material presentation interface associated with the predetermined object is presented, the search information associated with the predetermined object is automatically filled in the predetermined search area, the user may perform material search based on the automatically filled search information according to the actual demands, or may perform material search after the search information is autonomously edited. The speed of searching the creation material related to the predetermined object by the user is further improved, and the media work creation efficiency is improved.

Optionally, in some embodiments, after the user performs autonomous edition on the search information, a confirmation option for modification corresponding to the predetermined object may be provided to the user. For example, upon confirmation of the modified associated target object, the media work obtained by creation with the first target material obtained after the search may be no longer associated with the original predetermined object, but is associated with the target object, that is, the first target material selected by the user is used to combine with the target object, to generate the media work.

In some embodiments, after presenting the material information of the first target material in the first predetermined presentation area in the material presentation interface, the method further includes: presenting, in response to a predetermined updating operation, material information of a second target material in the first predetermined presentation area, where a number of the second target material is greater than a number of the first target material, and/or the second target material is different from the first target material. Thus, more materials related to the search information may be presented to the user in a re-search manner.

For example, when the re-searching is performed, a more broader search condition may be determined (for example, the search result is that the search terms are increased in the case of a union of at least two sets of materials; for another example, a threshold of the matching degree is decreased, etc.), and the material obtained after re-searching is used as the second target material. The first target material may also be filtered out on the basis of the material obtained after re-searching to obtain the second target material, so that the user may check the material that has not been previously viewed, and the material selection efficiency is improved. For example, a re-searching control may be presented in the first predetermined presentation area, and in response to a trigger operation on the re-searching control, the material information of the second target material is presented in the first predetermined presentation area. As shown in FIG. 5, if there are 8 first target materials, and the user has not found satisfactory material therefrom, re-searching may be performed in a manner of triggering the re-searching control.

In some embodiments, the search information includes a set of search terms, and each of the set of search terms is associated with a deletion control; and updating the search information in response to the editing operation for the search information includes: deleting, in response to a trigger operation for a target deletion control, a search term corresponding to the target deletion control from the set of search terms, to update the search information. Thus, the search term is displayed, so that the user may conveniently know the search basis of the currently presented first target material, the search information may be edited more quickly, and the search term may be quickly deleted by triggering the deletion control.

For example, if the search result is that an intersection of at least two set of materials, a search range may be expanded by deleting the search term, so that the user may browse more materials; and if the search result is a union of at least two sets of materials, the search range may be narrowed by deleting the search term, and the efficiency of searching the material by the user is improved.

In some embodiments, the method further includes: displaying a predetermined addition control in a predetermined presentation area in the material presentation interface; where updating the search information in response to the editing operation for the search information includes: determining a target search term in response to a trigger operation for the predetermined addition control, and adding the target search term to the search information, to update the search information. Thus, it may be supported that the search information may be edited by the user by adding the search term, and the editing efficiency is improved.

In some embodiments, determining the target search term in response to the trigger operation for the predetermined addition control includes: determining, in response to a trigger operation for a target predetermined addition control, an alternative search term in the target predetermined addition control as the target search term, where an alternative search term is displayed in the predetermined addition control, and the alternative search term is associated with the predetermined object. Thus, the candidate search term associated with the predetermined object may be automatically presented for the user to select, and the editing efficiency of the search information is further improved.

In some embodiments, determining the target search term in response to the trigger operation for the predetermined addition control includes: presenting an input control in response to the trigger operation for the target predetermined addition control, and receiving the target search term based on the input control. Thus, the user may freely input the target search term and improve the search accuracy.

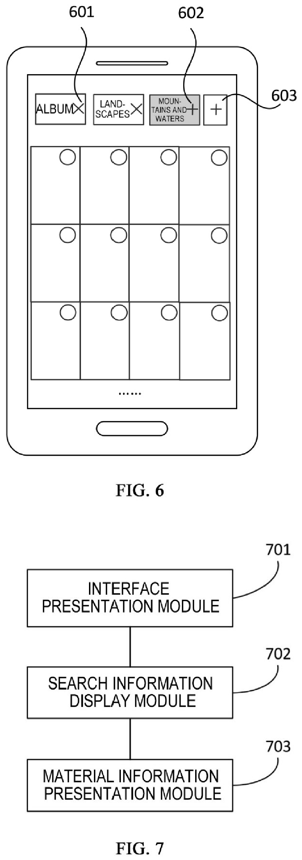

FIG. 6 is a schematic diagram of another interface provided by an embodiment of the present disclosure. As shown in FIG. 6, a set of search terms is displayed in the material presentation interface, the set of search terms includes two search terms, "album" and "landscape". In this case, the predetermined search area is a display area where the set of search terms is located, each search term is associated with a deletion control 601, such as a cross mark shown in the figure. The associated search term may be deleted after the deletion control 601 is tapped, for example, "album" is deleted. In the material presentation interface, a first predetermined addition control 602 and a second predetermined addition control 603 are further displayed, an alternative search term, such as "mountains and waters", is displayed in the first predetermined addition control 602. By triggering the first predetermined addition control 602, the candidate search term included therein may be added to the set of search terms as a target search term, and "mountains and waters" may be changed to a display style of the "landscapes" and displayed in the predetermined search area. By triggering the second predetermined addition control 603 to present the input control, the user may freely input the target search term to be added based on the input control.

FIG. 7 is a schematic structural diagram of an apparatus for material presentation provided by an embodiment of the present disclosure. As shown in FIG. 7, the apparatus includes: an interface presentation module 701 configured to present, in response to a creation material presentation operation, a material presentation interface in a predetermined creation interface corresponding to a predetermined object, where the predetermined object is configured to create a media work; a search information display module 702 configured to display search information in a predetermined search area in the material presentation interface, where the search information is associated with the predetermined object; and a material information presentation module 703 configured to present material information of a first target material in a first predetermined presentation area in the material presentation interface, where the first target material includes a material matching the search information in a predetermined material library corresponding to the material presentation interface.

According to the apparatus for material presentation provided by the embodiment of the present disclosure, in a predetermined creation interface corresponding to a predetermined object for creating a media work, in response to a creation material presentation operation, a material presentation interface is presented, search information associated with the predetermined object is displayed in a predetermined search area in the material presentation interface, material information of a first target material is presented in a first predetermined presentation area in the material presentation interface, and the first target material includes a material associated with the search information in a predetermined material library corresponding to the material presentation interface. By adopting the above technical solutions, in the process of creating the media work by using the predetermined object, the search information may be displayed in the predetermined search area in the material presentation interface when it is necessary to perform selection of the creation material from the predetermined material library, and the material associated with the search information in the predetermined material library is presented, so that the speed of searching the creation material related to the predetermined object by the user is improved, and the media work creation efficiency is improved.

Optionally, the apparatus further includes: a search trigger module configured to, after displaying the search information in the first predetermined search area in the material presentation interface, receive a search trigger operation, where the material information presentation module is specifically configured to: present, in response to the search trigger operation, the material information of the first target material in the first predetermined presentation area in the material presentation interface.

Optionally, receiving the search trigger operation includes: receiving a trigger operation for the predetermined search area; and the apparatus further includes: an input control presentation module configured to present, in response to the trigger operation for the predetermined search area, an input control in the material presentation interface, where the input control is configured to receive an editing operation for the search information.

Optionally, the apparatus further includes: a first information presentation module configured to, before receiving the search trigger operation, present material information of a first predetermined material in a second predetermined presentation area in the material presentation interface, where the first predetermined material includes a material in the predetermined material library.

Optionally, the apparatus further includes: a second information presentation module configured to, while presenting the material information of the first target material in the first predetermined presentation area in the material presentation interface, present material information of a second predetermined material in a third predetermined presentation area in the material presentation interface, where the third predetermined presentation area is different from the first predetermined presentation area, and the second predetermined material includes a material in the predetermined material library that is different from the first target material.

Optionally, in accordance with the search information including at least two search terms, the first target material includes an intersection or union of at least two sets of materials, and each set of materials in the at least two sets of materials includes a material obtained by searching in the predetermined material library according to the corresponding search term.

Optionally, the apparatus further includes: a search information updating module configured to, after displaying the search information in the predetermined search area in the material presentation interface, update the search information in response to an editing operation for the search information, where the first target material includes a material matching the updated search information in the predetermined material library corresponding to the material presentation interface.

Optionally, the search information includes a set of search terms, and each of the set of search terms is associated with a deletion control; and the search information updating module is specifically configured to delete, in response to a trigger operation for a target deletion control, a search term corresponding to the target deletion control from the set of search terms, to update the search information.

Optionally, the apparatus further includes: an addition control display module configured to display a predetermined addition control in a predetermined presentation area in the material presentation interface, where the search information updating module is specifically configured to determine a target search term in response to a trigger operation for the predetermined addition control, and add the target search term to the search information, to update the search information.

Optionally, determining the target search term in response to the trigger operation for the predetermined addition control includes: determining, in response to a trigger operation for a target predetermined addition control, an alternative search term in the target predetermined addition control as the target search term, where an alternative search term is displayed in the predetermined addition control, and the alternative search term is associated with the predetermined object; and/or, presenting an input control in response to the trigger operation for the target predetermined addition control, and receiving the target search term based on the input control.

Optionally, the apparatus further includes: a third information presentation module configured to, after presenting the material information of the first target material in the first predetermined presentation area in the material presentation interface, present, in response to a predetermined updating operation, material information of a second target material in the first predetermined presentation area, where a number of the second target material is greater than a number of the first target material, and/or the second target material is different from the first target material.

Optionally, a type of the predetermined object includes a creation theme and/or a creation element, the first target material is selectable by a user, and the first target material selected by the user is configured to be combined with the predetermined object to generate a media work.

Optionally, the creation element includes a predetermined visualization element, and the apparatus further includes: a display module configured to display, in response to a selection operation of the user for the first target material, the first target material selected by the user and the predetermined visualization element on the predetermined creation interface.

Optionally, displaying the first target material selected by the user and the predetermined visualization element on the predetermined creation interface includes: displaying the first target material selected by the user on the predetermined creation interface, and displaying the predetermined visualization element in association with the theme information of the predetermined object.

Optionally, the search information being associated with the predetermined object includes: the search information being associated with theme information of the predetermined object.

The apparatus for material presentation provided by the embodiments of the present disclosure may perform the method for material presentation provided by any embodiment of the present disclosure, and has functional modules and beneficial effects corresponding to execution of the method.

It should be noted that various units and modules included in the foregoing apparatus are only divided according to the function logic, but are not limited to the foregoing division, as long as the corresponding functions may be implemented; in addition, specific names of the functional units are merely for ease of distinguishing, and are not intended to limit the protection scope of the embodiments of the present disclosure.

According to the material presentation solution provided by the embodiments of the present disclosure, in a predetermined creation interface corresponding to a predetermined object configured to create a media work, in response to a creation material presentation operation, a material presentation interface is presented. Search information associated with the predetermined object is displayed in a predetermined search area in the material presentation interface. Material information of the first target material is presented in a first predetermined presentation area in the material presentation interface. The first target material includes a material matching the search information in a predetermined material library corresponding to the material presentation interface. By adopting the above technical solution, in the process of creating the media work by using the predetermined object, when it is necessary to select a creation material from the predetermined material library, the search information may be displayed in the predetermined search area in the material presentation interface, and the material associated with the search information in the predetermined material library may be presented, thereby improving the speed of the user for searching the creation material related to the predetermined object, and improving the media work creation efficiency.

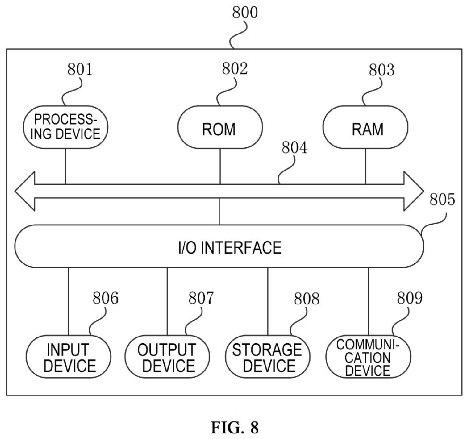

FIG. 8 is a schematic structural diagram of an electronic device provided by an embodiment of the present disclosure. Referring to FIG. 8, a schematic structural diagram of an electronic device (such as the terminal device or server in FIG. 8) suitable for implementing the embodiments of the present disclosure is shown. The terminal device in the embodiments of the present disclosure may include, but is not limited to, a mobile terminal such as a mobile phone, a notebook computer, a digital broadcast receiver, a PDA (personal digital assistant), a PAD (pad tablet), a PMP (portable multimedia player), an in-vehicle terminal (for example, an in-vehicle navigation terminal), and a fixed terminal such as a digital TV, a desktop computer, or the like. The electronic device shown in FIG. 8 is merely an example and should not impose any limitation on the functions and scope of use of the embodiments of the present disclosure.

As shown in FIG. 8, the electronic device 800 may include a processing device (for example, a central processing unit, a graphics processor, etc.) 801, which may perform various appropriate actions and processing according to a program stored in a read-only memory (ROM) 802 or a program loaded into a random access memory (RAM) 803 from a storage device 808. In the RAM 803, various programs and data required by the operation of the electronic device 800 are also stored. The processing device 801, the ROM 802, and the RAM 803 are connected to each other through a bus 804. An edit/output (I/O) interface 805 is also connected to the bus 804.

Generally, the following devices may be connected to the I/O interface 805; may include an input device 806 including, for example, a touch screen, a touchpad, a keyboard, a mouse, a camera, a microphone, an accelerometer, a gyroscope, etc.; may include an output device 807 including, for example, a liquid crystal display (LCD), a speaker, a vibrator, etc.; may include a storage device 808 including, for example, a magnetic tape, a hard disk, etc.; and a communication device 809. The communication device 809 may allow the electronic device 800 to communicate wirelessly or wired with other devices to exchange data. While FIG. 8 shows an electronic device 800 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product including a computer program carried on a non-transitory computer readable medium, the computer program including program code for performing the method shown in the flowchart. In such embodiments, the computer program may be downloaded and installed from the network through the communication device 809, or installed from the storage device 808, or from the ROM 802. When the computer program is executed by the processing apparatus 801, the foregoing functions defined in the method of the embodiments of the present disclosure are performed.

The names of messages or information interacted between the plurality of devices in the embodiments of the present disclosure are for illustrative purposes only and are not intended to limit the scope of such messages or information.

The electronic device provided by the embodiment of the present disclosure and the method for material presentation provided in the foregoing embodiments belong to the same inventive concept, and technical details not described in detail in this embodiment may refer to the foregoing embodiments, and this embodiment has the same beneficial effects as the foregoing embodiments.

An embodiment of the present disclosure provides a computer storage medium having a computer program stored thereon, the program, when executed by a processor, implements the method for material presentation provided in the foregoing embodiments.

An embodiment of the present disclosure provides a computer program product, including a computer program, where the program, when executed by a processor, implements the method for material presentation provided in the foregoing embodiments.

It should be noted that the computer-readable medium described above may be a computer-readable signal medium, a computer-readable storage medium, or any combination of the foregoing two. The computer-readable storage medium may be, for example, but not limited to, an electrical, magnetic, optical, electromagnetic, infrared, or semiconductor system, apparatus, or device, or any combination thereof. More specific examples of computer-readable storage medium may include, but are not limited to, an electrical connection having one or more wires, a portable computer diskette, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In the present disclosure, the computer-readable storage medium may be any tangible medium containing or storing a program that may be used by or in connection with an instruction execution system, apparatus, or device. In the present disclosure, the computer-readable signal medium may include a data signal propagated in a baseband or as a part of a carrier, where the computer-readable program code is carried. Such a propagated data signal may take a variety of forms including, but not limited to, an electromagnetic signal, an optical signal, or any suitable combination of the foregoing. The computer-readable signal medium may also be any computer-readable medium, other than a computer readable storage medium, that may send, propagate, or transmit a program for use by or in connection with an instruction execution system, apparatus, or device. The program code included on the computer-readable medium may be transmitted with any suitable medium, including, but not limited to: wires, optical cables, RF (radio frequency), or the like, or any suitable combination of the foregoing.

In some implementations, a client and a server may communicate using any currently known or future developed network protocol, such as HTTP (HyperText Transfer Protocol), and may be interconnected with any form or medium of digital data communication (e.g., a communication network). Examples of the communication network include local area networks ("LANs"), wide area networks ("WANs"), internets (e.g., the Internet), and peer-to-peer networks (e.g., ad hoc peer-to-peer networks), as well as any currently known or future developed networks.

The computer-readable medium described above may be included in the electronic device; or may be separately present without being assembled into the electronic device.

The computer-readable medium carries one or more programs, and when the one or more programs are executed by the electronic device, the electronic device is caused to: present, in response to a creation material presentation operation, a material presentation interface in a predetermined creation interface corresponding to a predetermined object, where the predetermined object is configured to create a media work; display search information in a predetermined search area in the material presentation interface, where the search information is associated with the predetermined object; and present material information of a first target material in a first predetermined presentation area in the material presentation interface, where the first target material includes a material matching the search information in a predetermined material library corresponding to the material presentation interface.

Computer program code for performing the operations of the present disclosure may be written in one or more programming languages or a combination thereof, the programming languages include, but not limited to, object oriented programming languages such as Java, Smalltalk, or C++, and conventional procedural programming languages, such as "C" language or similar programming languages. The program code may be executed entirely on a user computer, partially on a user computer, as a stand-alone software package, partially on a user computer and partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider).

The flowcharts and block diagrams in the figures illustrate possibly implemented architecture, functionality, and operation of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented with software, or may be implemented with hardware. In some cases, the name of the module does not constitute a limitation on the module itself. For example, the search information display module may be further described as "a module for displaying search information in a predetermined search area in the material presentation interface, where the search information is associated with the predetermined object".

The functions described above may be performed, at least in part, by one or more hardware logic components. For example, without limitation, illustrative types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium may include electrical connection based on one or more lines, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

According to one or more embodiments of the present disclosure, a method for material presentation is provided. The method includes: presenting, in response to a creation material presentation operation, a material presentation interface in a predetermined creation interface corresponding to a predetermined object, where the predetermined object is configured to create a media work; displaying search information in a predetermined search area in the material presentation interface, where the search information is associated with the predetermined object; and presenting material information of a first target material in a first predetermined presentation area in the material presentation interface, where the first target material includes a material matching the search information in a predetermined material library corresponding to the material presentation interface.

According to one or more embodiments of the present disclosure, after displaying the search information in the first predetermined search area in the material presentation interface, the method further includes: receiving a search trigger operation; where presenting the material information of the first target material in the first predetermined presentation area in the material presentation interface includes: presenting, in response to the search trigger operation, the material information of the first target material in the first predetermined presentation area in the material presentation interface.

According to one or more embodiments of the present disclosure, receiving the search trigger operation includes: receiving a trigger operation for the predetermined search area; where the method further includes: presenting, in response to the trigger operation for the predetermined search area, an input control in the material presentation interface, where the input control is configured to receive an editing operation for the search information.

According to one or more embodiments of the present disclosure, before receiving the search trigger operation, the method further includes: presenting material information of a first predetermined material in a second predetermined presentation area in the material presentation interface, where the first predetermined material includes a material in the predetermined material library.

According to one or more embodiments of the present disclosure, while presenting the material information of the first target material in the first predetermined presentation area in the material presentation interface, the method further includes: presenting material information of a second predetermined material in a third predetermined presentation area in the material presentation interface, where the third predetermined presentation area is different from the first predetermined presentation area, and the second predetermined material includes a material in the predetermined material library that is different from the first target material.

According to one or more embodiments of the present disclosure, the first target material includes an intersection or union of at least two sets of materials in accordance with the search information including at least two search terms, and each set of materials in the at least two sets of materials includes a material obtained by searching in the predetermined material library according to the corresponding search term.

According to one or more embodiments of the present disclosure, after displaying the search information in the predetermined search area in the material presentation interface, the method further includes: updating the search information in response to an editing operation for the search information, where the first target material includes a material matching the updated search information in the predetermined material library corresponding to the material presentation interface.

According to one or more embodiments of the present disclosure, the search information includes a set of search terms, and each of the set of search terms is associated with a deletion control; and updating the search information in response to the editing operation for the search information includes: deleting, in response to a trigger operation for a target deletion control, a search term corresponding to the target deletion control from the set of search terms, to update the search information.

According to one or more embodiments of the present disclosure, the method further includes: displaying a predetermined addition control in a predetermined presentation area in the material presentation interface; where updating the search information in response to the editing operation for the search information includes: determining a target search term in response to a trigger operation for the predetermined addition control, and adding the target search term to the search information, to update the search information.

According to one or more embodiments of the present disclosure, determining the target search term in response to the trigger operation for the predetermined addition control includes: determining, in response to a trigger operation for a target predetermined addition control, an alternative search term in the target predetermined addition control as the target search term, where an alternative search term is displayed in the predetermined addition control, and the alternative search term is associated with the predetermined object; and/or, presenting an input control in response to the trigger operation for a target predetermined addition control, and receiving the target search term based on the input control.

According to one or more embodiments of the present disclosure, after presenting the material information of the first target material in the first predetermined presentation area in the material presentation interface, the method further includes: presenting, in response to a predetermined updating operation, material information of a second target material in the first predetermined presentation area, where a number of the second target material is greater than a number of the first target material, and/or the second target material is different from the first target material.

According to one or more embodiments of the present disclosure, a type of the predetermined object includes a creation theme and/or a creation element, the first target material is selectable by a user, and the first target material selected by the user is configured to be combined with the predetermined object to generate a media work.

According to one or more embodiments of the present disclosure, the creation element includes a predetermined visualization element, and the method further includes: displaying, in response to a selection operation of the user for the first target material, the first target material selected by the user and the predetermined visualization element on the predetermined creation interface.

According to one or more embodiments of the present disclosure, displaying the first target material selected by the user and the predetermined visualization element on the predetermined creation interface includes: displaying the first target material selected by the user on the predetermined creation interface, and displaying the predetermined visualization element in association with theme information of the predetermined object.

According to one or more embodiments of the present disclosure, the search information being associated with the predetermined object includes: the search information being associated with the theme information of the predetermined object.

According to one or more embodiments of the present disclosure, an apparatus for material presentation. The apparatus includes: a presentation entering module configured to present, in response to a creation material presentation operation, a material presentation interface in a predetermined creation interface corresponding to a predetermined object, where the predetermined object is configured to create a media work; a search information display module configured to display search information in a predetermined search area in the material presentation interface, where the search information is associated with the predetermined object; and a material information presentation module configured to present material information of a first target material in a first predetermined presentation area in the material presentation interface, where the first target material includes a material matching the search information in a predetermined material library corresponding to the material presentation interface.

According to one or more embodiments of the present disclosure, an electronic device is provided. The electronic device includes: one or more processors; and a storage device for storing one or more programs, where when the one or more programs are executed by the one or more processors, the one or more processors are caused to implement the method for material presentation provided by the embodiments of the present disclosure.

According to one or more embodiments of the present disclosure, a storage medium is provided. The storage medium includes computer-executable instructions that, when executed by a computer processor, are configured to perform the method for material presentation provided by the embodiments of the present disclosure.

The above description is merely an illustration of the preferred embodiments of the present disclosure and the principles of the applied technology. It should be understood by those skilled in the art that the disclosure scope involved in the present disclosure is not limited to the technical solutions of the specific combination of the above technical features, and should also cover other technical solutions formed by any combination of the above technical features or their equivalent features without departing from the above disclosed concept, for example, technical solutions formed by mutually replacing the above features and technical features disclosed in the present disclosure (but not limited thereto) having similar functions.

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. A method for material presentation, comprising:
presenting, in response to a creation material presentation operation, a material presentation interface in a predetermined creation interface corresponding to a predetermined object, wherein the predetermined object is configured to create a media work;
displaying search information in a predetermined search area in the material presentation interface, wherein the search information is associated with the predetermined object;
presenting material information of a first target material in a first predetermined presentation area in the material presentation interface, wherein the first target material comprises a material matching the search information in a predetermined material library corresponding to the material presentation interface.

2. The method of claim 1, wherein after displaying the search information in the first predetermined search area in the material presentation interface, the method further comprises:
receiving a search trigger operation;
wherein presenting the material information of the first target material in the first predetermined presentation area in the material presentation interface comprises:
presenting, in response to the search trigger operation, the material information of the first target material in the first predetermined presentation area in the material presentation interface.

3. The method of claim 2, wherein receiving the search trigger operation comprises:
receiving a trigger operation for the predetermined search area;
wherein the method further comprises:
presenting, in response to the trigger operation for the predetermined search area, an input control in the material presentation interface, wherein the input control is configured to receive an editing operation for the search information.

4. The method of claim 2, wherein before receiving the search trigger operation, the method further comprises:
presenting material information of a first predetermined material in a second predetermined presentation area in the material presentation interface, wherein the first predetermined material comprises a material in the predetermined material library.

5. The method of claim 1, wherein while presenting the material information of the first target material in the first predetermined presentation area in the material presentation interface, the method further comprises:
presenting material information of a second predetermined material in a third predetermined presentation area in the material presentation interface, wherein the third predetermined presentation area is different from the first predetermined presentation area, and the second predetermined material comprises a material in the predetermined material library that is different from the first target material.

6. The method of claim 1, wherein the first target material comprises an intersection or union of at least two sets of materials in accordance with the search information comprising at least two search terms, and each set of materials in the at least two sets of materials comprises a material obtained by searching in the predetermined material library according to the corresponding search term.

7. The method of claim 1, wherein after displaying the search information in the predetermined search area in the material presentation interface, the method further comprises:
updating the search information in response to an editing operation for the search information, wherein the first target material comprises a material matching the updated search information in the predetermined material library corresponding to the material presentation interface.

8. The method of claim 7, wherein the search information comprises a set of search terms, and each of the set of search terms is associated with a deletion control;
wherein updating the search information in response to the editing operation for the search information comprises:
deleting, in response to a trigger operation for a target deletion control, a search term corresponding to the target deletion control from the set of search terms, to update the search information.

9. The method of claim 7, further comprising:
displaying a predetermined addition control in a predetermined presentation area in the material presentation interface;
wherein updating the search information in response to the editing operation for the search information comprises:
determining a target search term in response to a trigger operation for the predetermined addition control, and adding the target search term to the search information, to update the search information.

10. The method of claim 9, wherein determining the target search term in response to the trigger operation for the predetermined addition control comprises:
determining, in response to a trigger operation for a target predetermined addition control, an alternative search term in the target predetermined addition control as the target search term, wherein an alternative search term is displayed in the predetermined addition control, and the alternative search term is associated with the predetermined object; and/or
presenting an input control in response to the trigger operation for the target predetermined addition control, and receiving the target search term based on the input control.

11. The method of claim 1, wherein after presenting the material information of the first target material in the first predetermined presentation area in the material presentation interface, the method further comprises:
presenting, in response to a predetermined updating operation, material information of a second target material in the first predetermined presentation area, wherein a number of the second target material is greater than a number of the first target material, and/or the second target material is different from the first target material.

12. The method of any one of claims 1-11, wherein a type of the predetermined object comprises a creation theme and/or a creation element, the first target material is selectable by a user, and the first target material selected by the user is configured to be combined with the predetermined object to generate a media work.

13. The method of claim 12, wherein the creation element comprises a predetermined visualization element, and the method further comprises:
displaying, in response to a selection operation of the user for the first target material, the first target material selected by the user and the predetermined visualization element on the predetermined creation interface.

14. The method of claim 13, wherein displaying the first target material selected by the user and the predetermined visualization element on the predetermined creation interface comprises:
displaying the first target material selected by the user on the predetermined creation interface, and displaying the predetermined visualization element in association with theme information of the predetermined object.

15. The method of any one of claims 1-11, wherein the search information being associated with the predetermined object comprises: the search information being associated with the theme information of the predetermined object.

16. An apparatus for material presentation, comprising:
a presentation entering module configured to present, in response to a creation material presentation operation, a material presentation interface in a predetermined creation interface corresponding to a predetermined object, wherein the predetermined object is configured to create a media work;
a search information display module configured to display search information in a predetermined search area in the material presentation interface, wherein the search information is associated with the predetermined object;
a material information presentation module configured to present material information of a first target material in a first predetermined presentation area in the material presentation interface, wherein the first target material comprises a material matching the search information in a predetermined material library corresponding to the material presentation interface.

17. An electronic device, comprising:
one or more processors;
a storage device for storing one or more programs;
wherein when the one or more programs are executed by the one or more processors, the one or more processors are caused to implement the method for material presentation of any one of claims 1-15.

18. A storage medium comprising computer-executable instructions, wherein the computer-executable instructions, when executed by a computer processor, are configured to perform the method for material presentation of any one of claims 1-15.
